# EUROPEAN PATENT APPLICATION

(11) **EP 4 443 614 A2**
(43) Date of publication of application: **09.10.2024**
(21) Application number: 23215437.7
(22) Date of filing: 11.12.2023
(51) Int. Cl.: H01M 50/147, H01M 50/15, H01M 50/176

(54) **COVER ASSEMBLY AND SINGLE CELL INCLUDING THE SAME**

(30) Priority: 07.04.2023 CN 202320761697 U
(71) Applicant: AESC Japan Ltd., Yokohama-Shi, Kanagawa 220-0012 (JP)
(72) Inventor: CHE, Peipei, Jiangyin City, Wuxi City, 214443 (CN); CHEN, Hu, Jiangyin City, Wuxi City, 214443 (CN)
(74) Representative: Becker, Eberhard

(57) **Abstract**

Disclosed are a cover assembly (1) and a single cell including the cover assembly (1). The cover assembly (1) includes a cover body (20) having a penetrated cover through hole (21) and an electrode draw-out member (10) including a through portion (11) at least partially passes through the cover through hole (21) and a connection plate (12) located on one side of the covered body facing the electrode assembly; the connection plate (12) includes a first connection portion (121) connected to the through portion (11), a transitional connection portion (122) and a second connection portion (123) connected in sequence, and along a direction in which the electrode assembly is close to the cover body (20), one side of at least part of the second connection portion (123) facing the electrode assembly is higher than one side of the first connection portion (121) facing the electrode assembly for accommodating the tab.

## Description

### BACKGROUND

### Technical Field

The disclosure relates to the field of batteries, in particular to a cover assembly and a single cell including the same.

### Description of Related Art

In existing technology, an electrode assembly and a pole are normally electrically connected through an adapter in square-shaped batteries. The electrode assembly is provided with a tab. The adapter includes a pole connection region and a tab connection region. The tab connection region is electrically connected to the tab, and the assembled entirety is electrically connected to the pole through the pole connection region to complete the assembly.

In the related art, there is a method in which the pole is adopted without using an adapter. A bottom plate is formed on the bottom surface of the pole. The pole extends out of the cover through hole on the cover body and is electrically connected to the external connection end. The bottom plate is located on one side of the cover body close to the electrode assembly, the bottom plate is electrically connected to the tab drawn out of the electrode assembly.

Since the bottom plate and the tab are assembled and fixed by welding, the folded tab will occupy some vertical space, which affects the overall height inside the battery core and causes a waste of vertical space of the battery core.

### SUMMARY

The disclosure aims to overcome the technical problem that, in the existing technology, tabs need to take up some vertical space, which affects the overall height of the battery core, and results in a waste of volumetric space of the battery core. The disclosure provides a cover assembly and a single cell including the same as a technical solution.

The disclosure solves the above technical problems through the following technical solutions:
A cover assembly is characterized in including:
a cover body having a penetrated cover through hole;
an electrode draw-out member including a through portion and a connection plate connected to each other, the through portion at least partially passes through the cover through hole, and the connection plate is located on one side of the cover body facing the electrode assembly;
the connection plate includes a first connection portion, a transitional connection portion and a second connection portion connected in sequence, the first connection portion is connected to the through portion, and at least a part of the second connection portion is disposed to be electrically connected with the tab drawn out of the electrode assembly;
wherein along a direction in which the electrode assembly is close to the cover body, one side of at least a part of the second connection portion facing the electrode assembly is higher than one side of the first connection portion facing the electrode assembly, thereby forming an accommodation space for accommodating the tab.

In this technical solution, along a direction in which the electrode assembly is close to the cover body, by making one side of at least a part of the second connection portion facing the electrode assembly to be higher than one side of the first connection portion facing the electrode assembly, thereby forming an accommodation space for accommodating the tab, it is possible to reduce a part or all of the height occupied by the tab in the longitudinal direction, thereby decreasing the height of the internal structure of the battery core and the volume occupied by the height, thus achieving the advantageous technical effect of improving utilization of vertical space.

Preferably, one side of the second connection portion facing the electrode assembly is recessed in a direction close to the cover body relative to one side of the first connection portion facing the electrode assembly to form the accommodation space.

In the technical solution, by arranging one side of the second connection portion of the connection plate facing the electrode assembly to be recessed in a direction close to the cover body relative to one side of the first connection portion facing the electrode assembly, the disclosure provides a way to specifically form an accommodation space for accommodating tabs drawn out of the electrode assembly.

Preferably, a part of the second connection portion is bent toward the cover body to form the accommodation space; or,
a part of the transitional connection portion is bent toward the cover body to form the accommodation space.

Preferably, when a part of the transitional connection portion is bent toward the cover body, a minimum cross-sectional area of the transitional connection portion is greater than a cross-sectional area of the second connection portion.

In this technical solution, by defining the minimum cross-sectional area of the transitional connection portion to be greater than the cross-sectional area of the second connection portion, that is to say, the cross-sectional area of any part of the transitional connection portion including the bending region forming the accommodation space is greater than that of the second connection portion, so that it may be ensured that the current-carrying area of the bending region forming the accommodation space at the transitional connection portion is not the smallest area, so the current-carrying capability of the bending region may be ensured. In this way, the normal operation of the current path between the second connection portion and the first connection portion may not be affected.

Preferably, a bending portion is formed in the bending region, and the bending portion includes a first bending portion and a second bending portion that are bent in different directions and connected together;
the first bending portion and the second bending portion are both bent obliquely; and/or the bending positions of the first bending portion and the second bending portion are formed in rounded corners.

In this technical solution, by arranging the bending portion to include a first bending portion and a second bending portion that are bent in different directions and connected together to form a Z-shaped bending structure, it is possible to save as much the solid space required for forming the accommodation space as possible so that the overall structure is more compact. Compared with bending at a right-angle that is more likely to cause stress concentration, making the first bending portion and the second bending portion to be bent obliquely may better ensure the connection reliability at the bending portion and preferable mechanical properties. By making the bending positions of the first bending portion and the second bending portion to be rounded, it is possible to reduce the risk of breakage during metal punching, and the arcuate transition formed by the rounded corners helps to improve the connection strength of components. In this way, in extreme working conditions such as vibration and impact, the risk of connection failure of the connection plate may be reduced and the structural reliability may be considerably improved.

Preferably, thicknesses of the second connection portion and the transitional connection portion are the same; and the thickness of at least a part of the bending portion is less than the thickness of the second connection portion.

In this technical solution, the overall strength of the connection plate is ensured by setting the thicknesses of the second connection portion and the transitional connection portion to be the same.

Preferably, one end of the through portion close to the connection plate is provided with an extension portion protruding from the surface of the through portion along a radial direction of the through portion, and the extension portion is disposed to press-fit a sealing member in between the extension portion and the cover body.

Along a direction in which the electrode assembly is close to the cover body, one side of the second connection portion facing the cover body is lower than or equal to one side of the sealing member facing the cover body; or, one side of the second connection portion facing the cover body is lower than or equal to one side of the extension portion facing the cover body.

In the technical solution, by making the electrode draw-out member to carry the extension portion that press-fits the sealing member, a press-fitting force may be applied to the sealing member, so that the sealing member is better compressed, thus ensuring the sealing performance and insulation reliability of the electrode draw-out member. By making one side of the second connection portion facing the cover body to be lower than or equal to one side of the sealing member facing the cover body, it is ensured that the extension portion is able to compress the sealing member and thus serving a sealing function. By making one side of the second connection portion facing the cover body to be lower than or equal to one side of the extension portion facing the cover body, it is possible to prevent the height of the extension portion from being too low to reach the height for press-fitting the sealing member and fail to achieve the sealing effect.

Preferably, the through portion and the extension portion are integrally formed; and/or,
the extension portion is integrally formed with the first connection portion, or the extension portion is connected to the first connection portion by welding.

In the technical solution, the connection strength between the through portion and the extension portion is enhanced by making the through portion and the extension portion to be integrally formed. By making the extension portion and the first connection portion to be integrally formed, the connection area between the through portion and the connection plate is increased and expanded, and the connection strength between the components is enhanced. By making the extension portion to be connected to the first connection portion by welding, that is to say, the through portion is also connected to the first connection portion by welding. By making the extension portion to be located on the through portion, the restoring force of the sealing member may be applied to the extension portion first, so it is possible to prevent the restoring force of the sealing member from being applied on the weld, thereby increasing the reliability of the connection between the connection plate and the through portion.

Preferably, the extension portion is coaxially disposed with the through portion, a first arc segment is disposed on one side of the extension portion away from the second connection portion, the first connection portion is provided with a second arc segment at a position corresponding to the first arc segment of the extension portion, and the second arc segment has the same curvature as the first arc segment;
one end of the transitional connection portion close to the first connection portion extends along a tangential direction of an end portion of the second arc segment.

In the technical solution, by disposing the first arc segment on one side of the extension portion away from the second connection portion, making the first connection portion to be provided with the second arc segment at a position corresponding to the first arc segment of the extension portion, and making the second arc segment to have the same curvature as the first arc segment, that is, the shape and size of the second arc segment exactly matches the first arc segment, and the shapes and sizes of the first connection portion and one side of the extension portion away from the second connection portion completely match each other, it is possible to ensure the most effective connection between the first connection portion and the extension portion, which reduces the overall weight of the connection plate as much as possible. Furthermore, by making one end of the transitional connection portion close to the first connection portion to extend in the tangential direction of the end portion of the second arc segment, the overall weight of the connection plate is further reduced.

Preferably, one side of the first connection portion facing the cover body and one side of the second connection portion facing the cover body are located on the same plane, the thickness of the second connection portion is less than the thickness of the first connection portion, and a region having a thickness difference between the second connection portion and the first connection portion forms the accommodation space.

In the technical solution, by forming the region having a thickness difference between the second connection portion and the first connection portion into the accommodation space, that is, the accommodation space is formed by thinning the thickness of the second connection portion, a specific way of forming the accommodation space is thus provided. By making one side of the first connection portion facing the cover body and one side of the second connection portion facing the cover body to be located on the same plane, space utilization of the battery core is further improved.

Preferably, one side of the first connection portion facing the cover body, one side of the second connection portion facing the cover body and one side of the transitional connection portion facing the cover body are located on the same plane, the thickness of the second connection portion is less than the thickness of the transitional connection portion, and the thickness of the transitional connection portion is less than or equal to the thickness of the first connection portion.

In the technical solution, by setting the thickness of the transitional connection portion to be equal to the thickness of the first connection portion, it is possible to achieve the advantageous technical effect of maintaining and improving the structural strength. By setting the thickness of the transitional connection portion to be less than the thickness of the first connection portion, it is possible to further achieve the advantageous technical effects on reducing the weight of the overall structure and increasing energy density. By making one side of the first connection portion facing the cover body, one side of the second connection portion facing the cover body and one side of the transitional connection portion facing the cover body to be located on the same plane, space utilization of the battery core may be further improved.

Preferably, a groove is disposed on one side of the second connection portion facing the electrode assembly, and the groove forms the accommodation space.

In the technical solution, a groove is disposed on one side of the second connection portion facing the electrode assembly, that is, a part of one side of the second connection portion facing the electrode assembly is recessed in a direction close to the cover body, thereby providing a specific implementation of forming the accommodation space.

Preferably, the second connection portion has a protrusion at a position corresponding to the groove on one side facing the cover body; or,
one side of the second connection portion facing the cover body and one side of the transitional connection portion facing the cover body are located on the same plane.

In the technical solution, by making the second connection portion to have a protrusion at a position corresponding to the groove on one side facing the cover body, it is possible to ensure the thickness of the bottom wall at the position of the groove, thereby ensuring the connection strength of the second connection portion. By making one side of the second connection portion facing the cover body and one side of the first connection portion facing the cover body to be located on the same plane, space utilization of the battery core may be further improved.

The number of the second connection portions is multiple, and at least one of the plurality of second connection portions is provided with the accommodation space; and/or,
the second connection portion includes a plurality of second connection divisions connected in sequence, and at least one of the plurality of second connection divisions is provided with the accommodation space.

In the technical solution, by providing an accommodation space in at least one of the plurality of second connection portions, it is possible to reduce a part of the height occupied by the tab in the longitudinal direction, thereby reducing the height of the internal structure of the battery core and the volume occupied by the height, so as to realize the advantageous technical effect of improving utilization of vertical space. By providing an accommodation space in at least one of the plurality of sequentially connected second connection divisions, it is possible to reduce a part of the height occupied by the tab in the longitudinal direction, thereby reducing the height of the internal structure of the battery core and the volume occupied by the height, so as to realize the advantageous technical effect of improving utilization of vertical space.

The height of the accommodation space is greater than or equal to 0.3 times the thickness of the tab, and is less than or equal to the thickness of the tab.

In the technical solution, by setting the relationship between the height of the accommodation space and the thickness of the tab, at least a part of the height occupied by the tab may be received in the accommodation space, thus further improving space utilization of the battery core.

A single cell is characterized in including:
a housing;
the cover assembly as described above, wherein the cover assembly is disposed to cover the housing and defines an accommodation cavity together with the housing;
a battery core, which is accommodated in the accommodation cavity, and the electrode assembly is connected to the battery core.

In the technical solution, along a direction in which the electrode assembly is close to the cover body, by making one side of at least a part of the second connection portion of the connection plate facing the electrode assembly to be higher than one side of the first connection portion facing the electrode assembly, thereby forming an accommodation space for accommodating the tab, it is possible to reduce a part or all of the height occupied by the tab in the longitudinal direction, thereby decreasing the height of the internal structure of the battery core and the volume occupied by the height, thus achieving the advantageous technical effect of improving utilization of vertical space.

The positive progressive effects of this disclosure are:

In the disclosure, along a direction in which the electrode assembly is close to the cover body, by making one side of at least a part of the second connection portion of the connection plate facing the electrode assembly to be higher than one side of the first connection portion facing the electrode assembly, thereby forming an accommodation space for accommodating the tab, it is possible to reduce a part or all of the height occupied by the tab in the longitudinal direction, thereby decreasing the height of the internal structure of the battery core and the volume occupied by the height, thus achieving the advantageous technical effect of improving utilization of vertical space.

### BRIEF DESCRIPTION OF THE DRAWINGS

FIG. 1 is a three-dimensional exploded structural view of a cover assembly according to Embodiment 1 of the present disclosure.
FIG. 2 is a schematic bottom view of the cover assembly according to Embodiment 1 of the present disclosure.
FIG. 3 is a three-dimensional structural view of the cover assembly according to Embodiment 1 of the present disclosure.
FIG. 4 is a cross-sectional structural view of the cover assembly according to Embodiment 1 of the present disclosure.
FIG. 5 is a three-dimensional structural view of an electrode draw-out member of the cover assembly according to Embodiment 1 of the present disclosure.
FIG. 6 is a schematic bottom view of a connection plate of the electrode draw-out member of the cover assembly according to Embodiment 1 of the present disclosure.
FIG. 7 is a three-dimensional structural view of an electrode draw-out member of the cover assembly according to another implementation of Embodiment 1 of the present disclosure.
FIG. 8 is a three-dimensional structural view of an electrode draw-out member of a cover assembly according to Embodiment 2 of the present disclosure.
FIG. 9 is a three-dimensional structural view of viewing the electrode draw-out member of the cover assembly according to Embodiment 2 of the present disclosure from another angle.
FIG. 10 is a three-dimensional structural view of an electrode draw-out member of a cover assembly according to another implementation of Embodiment 2 of the present disclosure.

### REFERENCE SIGNS LIST

1: cover assembly; 10: electrode draw-out member; 11: through portion; 111: extension portion; 1111: first arc segment; 12: connection plate; 121: first connection portion; 1211: second arc segment; 122: transitional connection portion; 123: second connection portion; 124: bending portion; 1241: first bending portion; 1242: second bending portion; 125: groove; 126: protrusion; 20: cover body; 21: cover through hole; 30: accommodation space; 40: insulating member; 41: insulating member through hole; 42: position-limiting portion; 50: sealing member; h height; H1: thickness; H2: thickness.

### DESCRIPTION OF THE EMBODIMENTS

Preferred embodiments and more clear and complete descriptions of the present disclosure are provided below in conjunction with the accompanying drawings.

### Embodiment 1

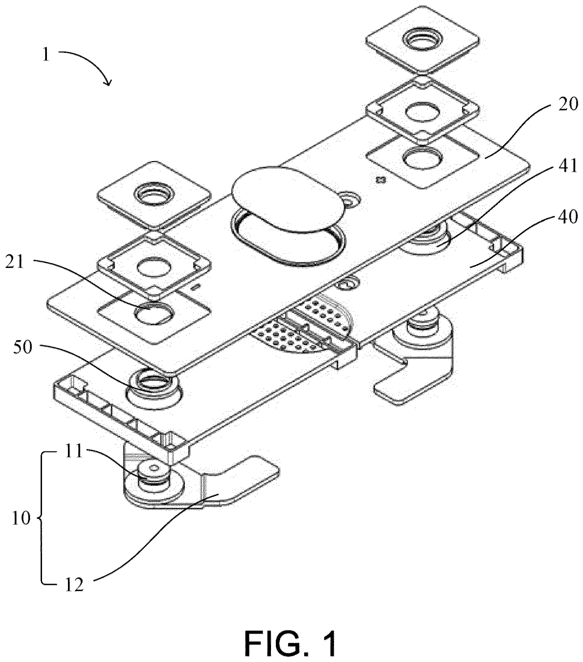

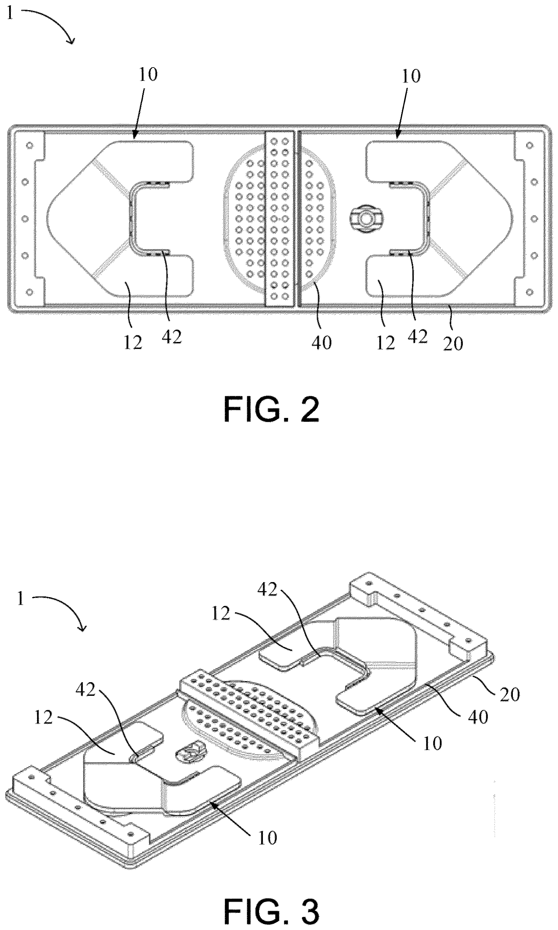

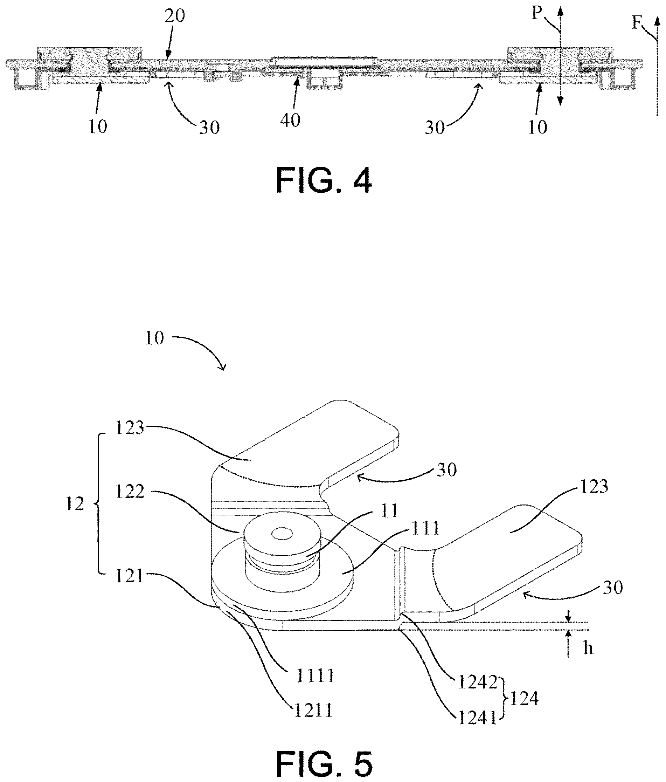

As shown in FIG. 1 to FIG. 6, this embodiment provides a cover assembly 1 and a single cell including the same. The single cell includes: a housing, the cover assembly 1 and a battery core.

The cover assembly 1 is disposed to cover the housing and defines an accommodation cavity together with the housing. The battery core is accommodated in the accommodation cavity, and the electrode assembly is connected with the battery core.

The cover assembly 1 includes a cover body 20 and an electrode draw-out member 10. The cover body 20 has a penetrated cover through hole 21.

One end of the electrode draw-out member 10 is electrically connected to the tab drawn out of the electrode assembly, and the other end at least partially passes through the cover through hole 21. Specifically, the electrode draw-out member 10 includes a through portion 11 and a connection plate 12 connected to each other. The through portion 11 at least partially passes through the cover through hole 21. The connection plate 12 is located on one side of the cover body 20 facing the electrode assembly.

The connection plate 12 includes a first connection portion 121, a transitional connection portion 122 and a second connection portion 123 connected in sequence. The first connection portion 121 is connected to the through portion 11, and at least a part of the second connection portion 123 is disposed to be electrically connected to the tab drawn out of the electrode assembly; wherein along a direction F in which the electrode assembly is close to the cover body 20, one side of at least a part of the second connection portion 123 facing the electrode assembly is higher than one side of the first connection portion 121 facing the electrode assembly, thereby forming an accommodation space 30 for accommodating the tab.

In this way, along a direction F in which the electrode assembly is close to the cover body 20, by making one side of at least a part of the second connection portion 123 facing the electrode assembly to be higher than one side of the first connection portion 121 facing the electrode assembly, thereby forming an accommodation space 30 for accommodating the tab, it is possible to reduce a part or all of the height occupied by the tab in the longitudinal direction, thereby decreasing the height of the internal structure of the battery core and the volume occupied by the height, thus achieving the advantageous technical effect of improving utilization of vertical space.

Furthermore, one side of the second connection portion 123 facing the electrode assembly is recessed in a direction close to the cover body 20 relative to one side of the first connection portion 121 facing the electrode assembly to form the accommodation space 30 for accommodating the tab. That is to say, by arranging one side of the overall second connection portion 123 (including the region connected to the tab and other regions) facing the electrode assembly to be higher than one side of the first connection portion 121 facing the electrode assembly, a way to specifically form the accommodation space 30 for accommodating the tab drawn out of the electrode assembly is provided.

It should be noted that one side of the connection plate 12 facing the cover body 20 and one side facing the electrode assembly are two opposite sides along an axial direction P of the through portion 11.

In this embodiment, a part of the transitional connection portion 122 is bent toward the cover body 20 to form the accommodation space 30, but the disclosure is not limited thereto. In other embodiments, a part of the second connection portion 123 may be bent toward the cover body 20 to form the accommodation space 30.

In this embodiment, the minimum cross-sectional area of the transitional connection portion 122 is greater than the cross-sectional area of the second connection portion 123. That is to say, the cross-sectional area of any part of the transitional connection portion 122 including the bending region forming the accommodation space 30 is greater than the cross-sectional area of the second connection portion 123, so that it may be ensured that the current-carrying area of the bending region forming the accommodation space 30 at the transitional connection portion 122 is not the smallest area, so the current-carrying capability of the bending region may be ensured. In this way, the normal operation of the current path between the second connection portion 123 and the first connection portion 121 may not be affected.

The bending portion 124 is formed in the bending region. The bending portion 124 includes a first bending portion 1241 and a second bending portion 1242 that are bent in different directions and connected together to form a Z-shaped bending structure, so it is possible to save as much the solid space required for forming the accommodation space 30 as possible so that the overall structure is more compact.

As mentioned above, since the minimum cross-sectional area of the transitional connection portion 122 is greater than the cross-sectional area of the second connection portion 123, the minimum cross-sectional area of the bending portion 124 is also greater than the cross-sectional area of the second connection portion 123 to ensure the current-carrying capability of the bending portion 124 without affecting the normal operation of the current path between the second connection portion 123 and the first connection portion 121.

Preferably, the first bending portion 1241 and the second bending portion 1242 are both bent obliquely. In this way, compared with bending at a right-angle that is more likely to cause stress concentration, making both of the first bending portion 1241 and the second bending portion 1242 to be bent obliquely may better ensure the connection reliability at the bending portion and preferable mechanical properties.

Specifically, the oblique bending angle of the first bending portion 1241 and the second bending portion 1242 is 15 degrees to 75 degrees.

The bending positions of both of the first bending portion 1241 and the second bending portion 1242 are rounded corners, so it is possible to reduce the risk of breakage during metal punching, and the arcuate transition formed by the rounded corners helps to improve the connection strength of components. In this way, in extreme working conditions such as vibration and impact, the risk of connection failure of the connection plate 12 may be reduced and the structural reliability may be considerably improved.

Preferably, the overall strength of the connection plate 12 is ensured by setting the thicknesses of the second connection portion 123 and the transitional connection portion 122 to be the same. It should be noted that since the second connection portion 123 and the transitional connection portion 122 have the same thickness, the second connection portion 123 will be raised as a whole through the bending portion 124. Therefore, one side of the second connection portion 123 facing the cover body 20 and one side of the unbent region of the transitional connection portion 122 facing the cover body 20 are not located on the same plane. A distance from one side of the second connection portion 123 facing the cover body 20 to the cover body 20 is less than a distance from one side of the unbent region of the transitional connection portion 122 facing the cover body 20 to the cover body 20.

The bending portion 124 may be formed by punching the connection plate 12. The thickness of the punching position may be the same as or different from the thickness of the adjacent region, and the thickness may be set as needed. In this embodiment, at least part of the thickness of the bending portion 124 is less than the thickness of the second connection portion 123.

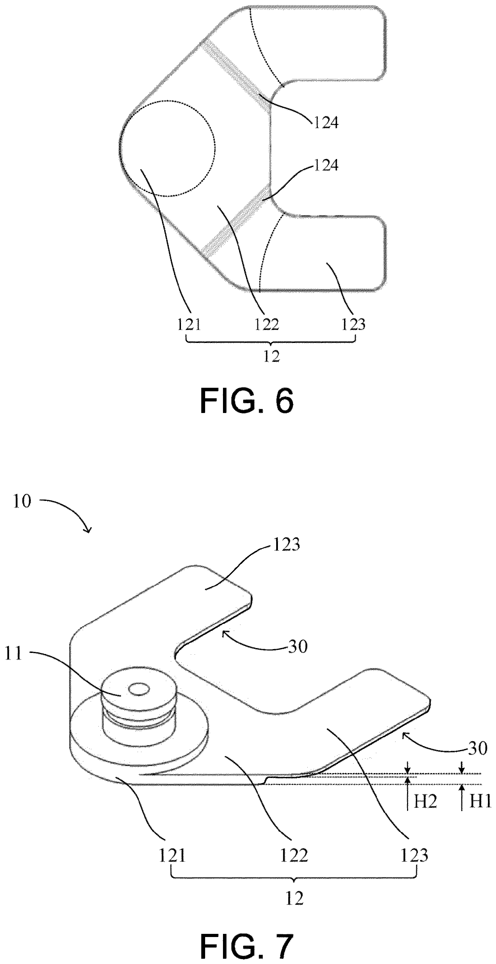

As shown in FIG. 7, in another implementation of this embodiment, one side of the first connection portion 121 facing the cover body 20 and one side of the second connection portion 123 facing the cover body 20 are located on the same plane. The thickness H2 of the second connection portion 123 is less than the thickness H1 of the first connection portion 121, and a region with a thickness difference between the second connection portion 123 and the first connection portion 121 forms the accommodation space 30. In this way, by forming the region having a thickness difference between the second connection portion 123 and the first connection portion 121 into the accommodation space 30, that is, the accommodation space 30 is formed by thinning the thickness of the second connection portion 123, a specific way of forming the accommodation space 30 is thus provided. By making one side of the first connection portion 121 facing the cover body 20 and one side of the second connection portion 123 facing the cover body 20 to be located on the same plane, space utilization of the battery core is further improved.

Further, one side of the first connection portion 121 facing the cover body 20, one side of the second connection portion 123 facing the cover body 20 and one side of the transitional connection portion 122 facing the cover body 20 are located on the same plane, the thickness of the second connection portion 123 is less than the thickness of the transitional connection portion 122, and the thickness of the transitional connection portion 122 is equal to the thickness of the first connection portion 121. By making the thickness of the transitional connection portion 122 to be equal to the thickness of the first connection portion 121, the advantageous technical effects of improving structural strength and increasing energy density may be achieved. By making one side of the first connection portion 121 facing the cover body 20, one side of the second connection portion 123 facing the cover body 20 and one side of the transitional connection portion 122 facing the cover body 20 to be located on the same plane, space utilization of the battery core is further improved.

However, the disclosure is not limited thereto. In other embodiments, the thickness of the transitional connection portion 122 may be set to be less than the thickness of the first connection portion 121 to further achieve the advantageous technical effect of reducing the weight of the overall structure.

In this embodiment, the height h of the accommodation space 30 is greater than or equal to 0.3 times the thickness of the tab, and is less than or equal to the thickness of the tab. In this way, by setting the relationship between the height h of the accommodation space 30 and the thickness of the tab, at least part of the height occupied by the tab may be received into the accommodation space 30, thus further improving the space utilization of battery core. Preferably, the height h of the accommodation space 30 is equal to the thickness of the tab, so as to achieve the advantageous technical effect of completely accommodating the tab into the accommodation space 30.

In this embodiment, the number of the second connection portions 123 is two, and both second connection portions 123 are provided with accommodation spaces 30. However, the disclosure is not limited thereto. In other embodiments, the number of the second connection portions 123 may also be three, four, or five, and at least one of the plurality of second connection portions 123 is provided with an accommodation space 30, so as to reduce a part or all of the height occupied by the tab in the longitudinal direction, thus decreasing the height of the internal structure of the battery core and the volume occupied by the height and achieving the advantageous technical effect of improving utilization of vertical space. In other embodiments, the second connection portion 123 includes a plurality of second connection divisions connected in sequence, and at least one of the plurality of second connection divisions is provided with the accommodation space 30 to reduce a part or all of the height occupied by the tab in the longitudinal direction, thus decreasing the height of the internal structure of the battery core and the volume occupied by the height and achieving the advantageous technical effect of improving utilization of vertical space.

The two second connection portions 123, the transitional connection portion 122, and the first connection portion 121 form a V-shaped structure as a whole. In this way, by making two second connection portions 123, transitional connection portions 122, and first connection portions 121 to form a V-shaped structure as a whole, excess waste may be reduced considerably and the overall weight of the structural components may be reduced.

In the embodiment, the through portion 11 and the connection plate 12 are composite separate structures, and the through portion 11 and the connection plate 12 are made of the same material. In this way, by making the through portion 11 and the connection plate 12 as composite separate structures, after processing the through portion 11 and the connection plate 12 separately, the two may be combined into a whole body, thereby considerably saving materials and thereby achieving the advantageous technical effect of saving costs. The through portion 11 and the connection plate 12 are made of the same material, thus making it easier to combine them together, and the connection strength between the two is enhanced.

However, the disclosure is not limited thereto. In other embodiments, the through portion 11 and the connection plate 12 may also be formed integrally. In this way, by providing the through portion 11 and the connection plate 12 to be integrally formed, the connection strength between the through portion 11 and the connection plate 12 is enhanced.

In this embodiment, the cover assembly 1 further includes an insulating member 40 covering one side of the cover body 20 facing the electrode assembly and located between the cover body 20 and the connection plate 12. The material of the insulating member 40 is plastic, but is not limited thereto, and may also be other insulating materials. The insulating member 40 is provided with an insulating member through hole 41 at a position corresponding to the cover through hole 21, and the through portion 11 of the electrode draw-out member 10 passes through the cover through hole 21 and the insulating member through hole 41 in sequence. The diameter of the insulating member through hole 41 is greater than the diameter of the cover through hole 21. One side of the cover through hole 21 facing the electrode assembly is provided with a sealing member 50. The sealing member 50 is interposed between the electrode draw-out member 10 and the cover body 20 and is located in the insulating member through hole 41.

One end of the through portion 11 close to the connection plate 12 is provided with an extension portion 111 protruding from the surface of the through portion 11 along a radial direction of the through portion 11, and the extension portion 111 is disposed to press-fit the sealing member 50 in between the extension portion 111 and the cover body 20.

Along a direction F in which the electrode assembly is close to the cover body 20, one side of the second connection portion 123 facing the cover body 20 is lower than or equal to one side of the sealing member 50 facing the cover body 20. In this way, by making the electrode draw-out member 10 to carry the extension portion 111 that press-fits the sealing member 50, a press-fitting force may be applied to the sealing member 50, so that the sealing member 50 is better compressed, thus ensuring the sealing performance and insulation reliability of the electrode draw-out member 10.

However, the disclosure is not limited thereto. In other embodiments, it may also be that one side of the second connection portion 123 facing the cover body 20 is lower than or equal to one side of the extension portion 111 facing the cover body 20. By making one side of the second connection portion 123 facing the cover body 20 to be lower than or equal to one side of the extension portion 111 facing the cover body 20, it is possible to prevent the height of the extension portion 111 from being too low to reach the height for press-fitting the sealing member 50 and fail to achieve the sealing effect.

In this embodiment, the through portion 11 and the extension portion 111 are integrally formed to enhance the connection strength between the through portion 11 and the extension portion 111. The extension portion 111 is connected to the first connection portion 121 through welding. That is to say, the through portion 11 is also connected to the first connection portion 121 through welding. By making the extension portion 111 to be located on the through portion 11, the restoring force of the sealing member 50 may be applied to the extension portion 111 first, so it is possible to prevent the restoring force of the sealing member 50 from being applied on the weld, thereby increasing the reliability of the connection between the connection plate 12 and the through portion 11.

However, the disclosure is not limited thereto. In other embodiments, the extension portion 111 and the first connection portion 121 may be integrally formed to increase and expand the connection area between the through portion 11 and the connection plate 12 and to enhance the connection strength between components.

In the embodiment, the extension portion 111 is coaxially disposed with the through portion 11, a first arc segment 1111 is disposed on one side of the extension portion 111 away from the second connection portion 123, the first connection portion 121 is provided with a second arc segment 1211 at a position corresponding to the first arc segment 1111 of the extension portion 111, and the second arc segment 1211 has the same curvature as the first arc segment 1111; one end of the transitional connection portion 122 close to the first connection portion 121 extends along a tangential direction of an end portion of the second arc segment 1211.

In this way, by disposing the first arc segment 1111 on one side of the extension portion 111 away from the second connection portion 123, making the first connection portion 121 to be provided with the second arc segment 1211 at a position corresponding to the first arc segment 1111 of the extension portion 111, and making the second arc segment 1211 to have the same curvature as the first arc segment 1111, that is, the shape and size of the second arc segment 1211 exactly matches the first arc segment 1111, and the shapes and sizes of the first connection portion 121 and one side of the extension portion 111 away from the second connection portion 123 completely match each other, it is possible to ensure the most effective connection between the first connection portion 121 and the extension portion 111, which reduces the overall weight of the connection plate 12as much as possible. Furthermore, by making one end of the transitional connection portion 122 close to the first connection portion 121 to extend in the tangential direction of the end portion of the second arc segment 1211, the overall weight of the connection plate 12 is further reduced.

One side of the insulating member 40 facing the electrode assembly is provided with an outwardly protruding position-limiting portion 42, and at least a part of the contour of the connection plate 12 is engaged on the position-limiting portion 42. In this way, by disposing the position-limiting portion 42 that is able to engage with at least a part of the contour of the connection plate 12 on the insulating member 40, on the one hand, when the electrode draw-out member 10 is assembled, the connection plate 12 may be conveniently positioned through the cooperation of the position-limiting portion 42 and the connection plate 12; on the other hand, an advantageous technical effect of preventing the connection plate 12 from shaking may be achieved.

The number of the electrode draw-out members 10 is two. The number of the cover through hole 21, the sealing member 50 and the insulating member through hole 41 corresponds to the number of the electrode draw-out member 10, which are two.

In the embodiment, along a direction F in which the electrode assembly is close to the cover body 20, by making one side of at least a part of the second connection portion 123 facing the electrode assembly to be higher than one side of the first connection portion 121 facing the electrode assembly, thereby forming an accommodation space 30 for accommodating the tab, it is possible to reduce a part or all of the height occupied by the tab in the longitudinal direction, thereby decreasing the height of the internal structure of the battery core and the volume occupied by the height, thus achieving the advantageous technical effect of improving utilization of vertical space.

### Embodiment 2

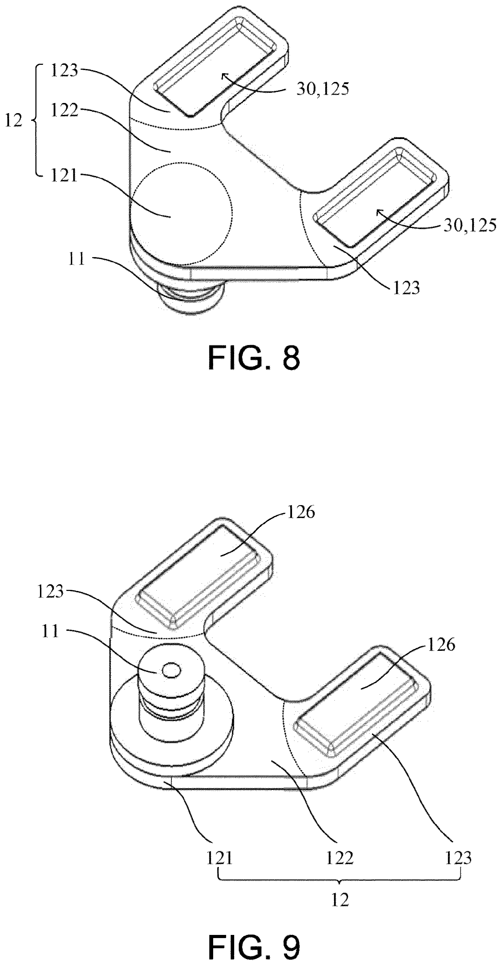

As shown in FIG. 6 to FIG. 9, the overall structure of the cover assembly 1 and the single cell including the same in this embodiment is substantially the same as that in Embodiment 1. The difference between the Embodiment 1 and Embodiment 2 lies in the arrangement of the accommodation space 30. Specifically, one side of the second connection portion 123 facing the electrode assembly is provided with a groove 125, and the groove 125 forms an accommodation space 30. In this way, by providing the groove 125 on one side of the second connection portion 123 facing the electrode assembly, that is, a part of the structure of one side of the second connection portion 123 facing the electrode assembly is recessed in a direction close to the cover body 20, in other words, by setting one side of a part of the second connection portion 123 (the region connected to the tab) facing the electrode assembly to be higher than one side of the first connection portion 121 facing the electrode assembly, a specific implementation for forming the accommodation space 30 is thus provided.

A protrusion 126 corresponding to the position of the groove 125 is disposed on one side of the second connection portion 123 facing the cover body 20 to ensure the thickness of the bottom wall at the position of the groove 125, thus ensuring the connection strength of the second connection portion 123.

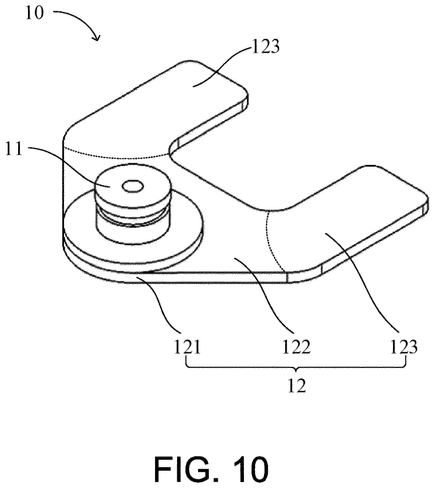

However, the disclosure is not limited thereto. As shown in FIG. 10, in another implementation of this embodiment, one side of the second connection portion 123 facing the cover body 20 and one side of the transitional connection portion 122 facing the cover body 20 are located on the same plane to further improve space utilization of the battery core. Further, one side of the first connection portion 121 facing the cover body 30, one side of the second connection portion 123 facing the cover body 20 and one side of the transitional connection portion 122 facing the cover body 20 are located on the same plane.

## Claims

1. A cover assembly (1) comprising:
a cover body (20) having a penetrated cover through hole (21);
an electrode draw-out member (10) comprising a through portion (11) and a connection plate (12) connected to each other, wherein the through portion (11) at least partially passes through the cover through hole (21), and the connection plate (12) is located on one side of the cover body (20) facing an electrode assembly;
the connection plate (12) comprises a first connection portion (121), a transitional connection portion (122) and a second connection portion (123) connected in sequence, the first connection portion (121) is connected to the through portion (11), and at least a part of the second connection portion (123) is disposed to be electrically connected with a tab drawn out of the electrode assembly,
wherein along a direction in which the electrode assembly is close to the cover body (20), one side of the at least part of the second connection portion (123) facing the electrode assembly is higher than one side of the first connection portion (121) facing the electrode assembly, thereby forming an accommodation space (30) for accommodating the tab.

2. The cover assembly (1) according to claim 1, wherein one side of the second connection portion (123) facing the electrode assembly is recessed in a direction close to the cover body (20) relative to one side of the first connection portion (121) facing the electrode assembly to form the accommodation space (30).

3. The cover assembly (1) according to claim 1 or 2, wherein a part of the second connection portion (123) is bent toward the cover body (20) to form the accommodation space (30); or,
a part of the transitional connection portion (122) is bent toward the cover body (20) to form the accommodation space (30).

4. The cover assembly (1) according to any one of claims 1 to 3, wherein when the part of the transitional connection portion (122) is bent toward the cover body (20), a minimum cross-sectional area of the transitional connection portion (122) is greater than a cross-sectional area of the second connection portion (123).

5. The cover assembly (1) according to any one of claims 1 to 4, wherein a bending portion (124) is formed in a bending region, and the bending portion (124) comprises a first bending portion (1241) and a second bending portion (1242) that are bent in different directions and connected together;
the first bending portion (1241) and the second bending portion (1242) are bent obliquely; and/or bending positions of the first bending portion (1241) and the second bending portion (1242) are formed in rounded corners.

6. The cover assembly (1) according to any one of claims 1 to 5, wherein thickness (H1, H2) of the second connection portion (123) and the transitional connection portion (122) are the same; and a thickness of at least a part of the bending portion (124) is less than the thickness (H2) of the second connection portion (123).

7. The cover assembly (1) according to any one of claims 1 to 6, wherein one end of the through portion (11) close to the connection plate (12) is provided with an extension portion (111) protruding from a surface of the through portion (11) along a radial direction of the through portion (11), and the extension portion (111) is disposed to press-fit a sealing member (50) in between the extension portion (111) and the cover body (20);
along a direction in which the electrode assembly is close to the cover body (20), one side of the second connection portion (123) facing the cover body (20) is lower than or equal to one side of the sealing member (50) facing the cover body (20); or, the one side of the second connection portion (123) facing the cover body (20) is lower than or equal to one side of the extension portion (111) facing the cover body (20).

8. The cover assembly (1) according to any one of claims 1 to 7, wherein the through portion (11) and the extension portion (111) are integrally formed; and/or,
the extension portion (111) is integrally formed with the first connection portion (121), or the extension portion (111) is connected to the first connection portion (121) by welding.

9. The cover assembly (1) according to any one of claims 1 to 8, wherein the extension portion (111) is coaxially disposed with the through portion (11), a first arc segment (1111) is disposed on one side of the extension portion (111) away from the second connection portion (123), the first connection portion (121) is provided with a second arc segment (1211) at a position corresponding to the first arc segment (1111) of the extension portion (111), and the second arc segment (1211) has a same curvature as the first arc segment (1111);
one end of the transitional connection portion (122) close to the first connection portion (121) extends along a tangential direction of an end portion of the second arc segment (1211).

10. The cover assembly (1) according to any one of claims 1 to 9, wherein one side of the first connection portion (121) facing the cover body (20) and one side of the second connection portion (123) facing the cover body (20) are located on a same plane, a thickness (H2) of the second connection portion (123) is less than a thickness (H1) of the first connection portion (121), and a region having a thickness difference between the second connection portion (123) and the first connection portion (121) forms the accommodation space (30).

11. The cover assembly (1) according to any one of claims 1 to 10, wherein the one side of the first connection portion (121) facing the cover body (20), the one side of the second connection portion (123) facing the cover body (20) and one side of the transitional connection portion (122) facing the cover body (20) are located on a same plane, the thickness (H2) of the second connection portion (123) is less than a thickness of the transitional connection portion (122), and the thickness of the transitional connection portion (122) is less than or equal to the thickness (H1) of the first connection portion (121).

12. The cover assembly (1) according to any one of claims 1 to 11, wherein a groove (125) is disposed on one side of the second connection portion (123) facing the electrode assembly, and the groove (125) forms the accommodation space (30).

13. The cover assembly (1) according to any one of claims 1 to 12, wherein the second connection portion (123) has a protrusion (126) at a position corresponding to the groove (125) on one side facing the cover body (20); or,
one side of the second connection portion (123) facing the cover body (20) and one side of the transitional connection portion (122) facing the cover body (20) are located on a same plane.

14. The cover assembly (1) according to any one of claims 1 to 13, wherein the number of the second connection portions (123) is multiple, and at least one of the plurality of the second connection portions (123) is provided with the accommodation space (30); and/or,
the second connection portion (123) comprises a plurality of second connection divisions connected in sequence, and at least one of the plurality of the second connection divisions is provided with the accommodation space (30).

15. The cover assembly (1) according to any one of claims 1 to 14, wherein a height (h)of the accommodation space (30) is greater than or equal to 0.3 times a thickness of the tab, and is less than or equal to the thickness of the tab.

16. A single cell comprising:
a housing;
the cover assembly (1) according to any one of claims 1 to 15, wherein the cover assembly (1) is disposed to cover the housing and defines an accommodation cavity together with the housing;
a battery core accommodated in the accommodation cavity, and the electrode assembly being connected to the battery core.
